Europäisches Patentamt

European Patent Office

Office européen des brevets

(11) Numéro de publication : **0 107 565**
**B1**

(12) **FASCICULE DE BREVET EUROPÉEN**

(45) Date de publication du fascicule du brevet :
30.12.86

(51) Int. Cl.⁴ : **C 03 B 35/18**

(21) Numéro de dépôt : **83401963.0**

(22) Date de dépôt : **07.10.83**

(54) **Dispositif pour le bombage ou la trempe d'une feuille de verre en continu.**

(30) Priorité : **11.10.82 FR 8216970**

(43) Date de publication de la demande :
**02.05.84 Bulletin 84/18**

(45) Mention de la délivrance du brevet :
**30.12.86 Bulletin 86/52**

(84) Etats contractants désignés :
**AT BE CH DE FR GB IT LI LU NL SE**

(56) Documents cités :
FR-A- 1 448 278
US-A- 3 934 996
US-A- 4 226 608

(73) Titulaire : **SAINT-GOBAIN VITRAGE**
**Les Miroirs 18, avenue d'Alsace**
**F-92400 Courbevoie (FR)**
**BE CH FR GB IT LI LU NL SE AT**
**VEGLA Vereinigte Glaswerke GmbH**
**Viktoriaallee 3-5**
**D-5100 Aachen (DE)**
**DE**

(72) Inventeur : **Schwarzenberg, Norbert**
**Wendelinusstrasse 45**
**D-5120 Herzogenrath (DE)**
Inventeur : **Überwolf, Heinz**
**Vogelsang 1**
**D-5120 Herzogenrath (DE)**
Inventeur : **Halberschmidt, Friedrich**
**Christian-Derichsstrasse 16**
**D-5120 Herzogenrath (DE)**
Inventeur : **Audi, Josef**
**Kronenberg 61**
**D-5100 Aachen (DE)**

(74) Mandataire : **Leconte, Jean-Gérard et al**
**Saint-Gobain Recherche 39, Quai Lucien Lefranc**
**F-93304 Aubervilliers Cedex (FR)**

## Description

L'invention a trait à un dispositif pour le bombage et/ou la trempe thermique de volumes de verre, effectués en continu par transport sur une succession de rouleaux formés d'arbres porteurs cintrés dont chacun est entouré d'une gaine tubulaire flexible axialement, mais rigide en torsion, montée tournante sur lui et entraînée en rotation pour provoquer le déplacement de ces volumes.

En raison de la courbure de l'arbre porteur, les gaines en question sont soumises à des efforts mécaniques plus ou moins importants puisque chaque segment de leur longueur se trouve perpétuellement cintré et tordu axialement dans un sens puis dans l'autre : elles doivent donc posséder dans le sens axial une flexibilité élevée. Sur les dispositifs connus de ce genre (publications de brevets FR-A-1 476 785, FR-A-2 189 330, FR-A-2 383 890), ces gaines sont constituées de minces tubes ou manchons métalliques ondulés. Dans le cas de la publication de brevet FR-A-1 476 785, elles sont en outre revêtues sur les parties extérieures d'un manchon en tresse de fils de silice. En raison de leurs sollicitations mécaniques inévitables, le danger existe qu'elles se détériorent plus ou moins rapidement ; il faut donc les remplacer périodiquement, ce qui coûte temps et argent aussi bien en raison du matériau réfractaire à employer que des manipulations exigées par l'échange.

L'invention a pour objet de créer, pour un dispositif de bombage et/ou de trempe du type précité, une gaine tubulaire qui, sans perdre en résistance à la torsion, possède une flexibilité axiale accrue et présente donc des durées d'utilisation plus importantes que celles connues jusqu'ici à cette fin.

Selon l'invention, les gaines tubulaires flexibles résistant à la torsion sont constituées d'un enroulement métallique tubulaire et d'une chemise coaxiale jointive en treillis métallique, rendus solidaires à leurs extrémités.

On connaît des tubes métalliques enroulés, constitués par exemple d'une bande métallique à section en S cintrée en une hélice dont les spires voisines s'emboîtent les unes sur les autres. Son caractère lâche permet à l'emboîtement de jouer suffisamment dans la direction axiale pour ne pas créer d'efforts dommageables de traction ou de compression. Cependant ces tubes ne possèdent pas une résistance en torsion suffisante ; suivant le sens de torsion de l'hélice, et en fonction de la résistance de frottement qui s'oppose à la rotation, il peut au contraire se produire une augmentation du diamètre, ou un rétrécissement conduisant à un serrage et un blocage sur l'arbre porteur ; en certaines circonstances, ceci peut provoquer la destruction de la gaine.

On connaît également, par le brevet US-A-4 226 608, pour constituer un dispositif de bombage de volumes de verre, des rouleaux flexibles formés d'un ressort à enroulement hélicoïdal dont les spires voisines sont relativement serrées sans être jointives. Mais une telle structure a les mêmes inconvénients que ceux précédemment mentionnés pour les tubes métalliques enroulés.

Selon l'invention, on obtient cependant une gaine possédant la résistance en torsion voulue si l'on assemble un tel tube, jointif, avec un tube en treillis métallique également connu en soi dans le commerce et dont il existe des modèles réfractaires. Les fils qui forment le treillis s'enroulent en sens inverse à 45° environ sur l'axe : ces tubes ont donc une bonne résistance à la torsion et une bonne flexibilité ; ils sont cependant incapables en soi de résister à des efforts axiaux.

Aux deux extrémités, le tube enroulé et le tube en treillis métallique sont avantageusement solidarisés par soudage.

L'invention sera décrite ci-dessous de façon plus détaillée, en référence aux dessins. Ceux-ci montrent :

figure 1 un dispositif de bombage selon l'invention sous forme d'une vue d'ensemble d'un rouleau de transport cintré,

figure 2 la structure de la gaine tournante flexible mais rigide en torsion,

figure 3 un détail d'une variante selon la représentation de la figure 2,

figure 4 un détail d'une autre variante selon la même représentation.

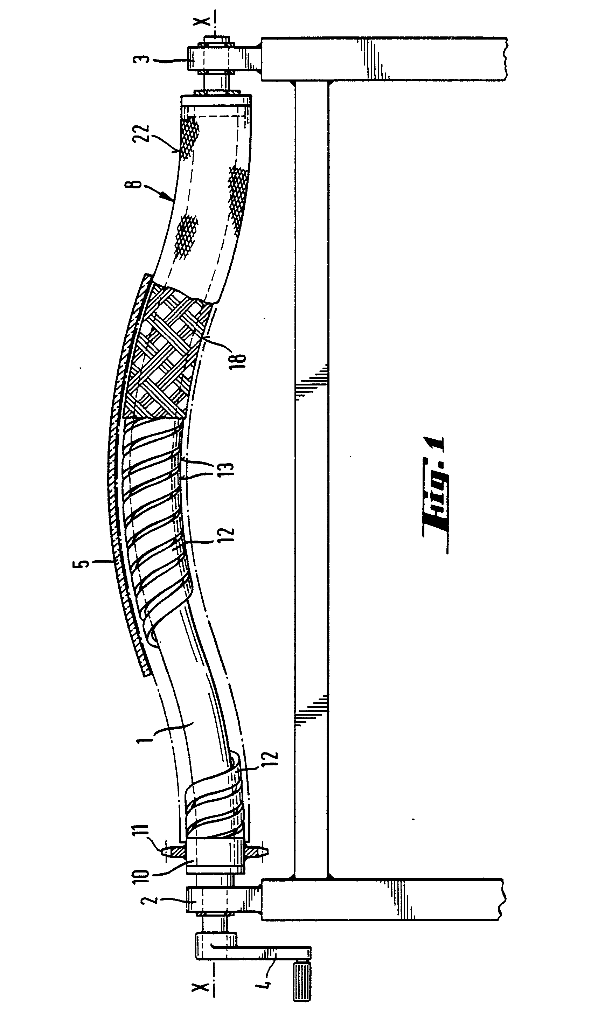

L'arbre porteur cintré 1 que montre la figure 1 est monté pivotant à ses deux extrémités, dans les paliers 2 et 3, autour de l'axe XX. Pour le faire basculer on utilise la manivelle 4 ou un autre appareillage mécanique. Dans la position représentée, l'arbre 1 est disposé verticalement et son plan de cintrage coïncide avec celui du dessin. Si on le fait pivoter de 90° par rapport à cette position, sa courbure vient à plat et il offre une portée supérieure plane. Dans la direction de transport des volumes 5 existent, l'un derrière l'autre, une succession d'arbres cintrés que l'on place ainsi dans le plan de transport. Si on les redresse et selon leur angle d'inclinaison par rapport au plan de transport, le rayon de courbure conféré aux volumes 5 par la surface porteuse devient plus ou moins grand. Avantageusement, les arbres successifs sont inclinés vers le haut d'un angle croissant dans la direction de transport, de sorte que la courbure de la feuille de verre augmente continuellement.

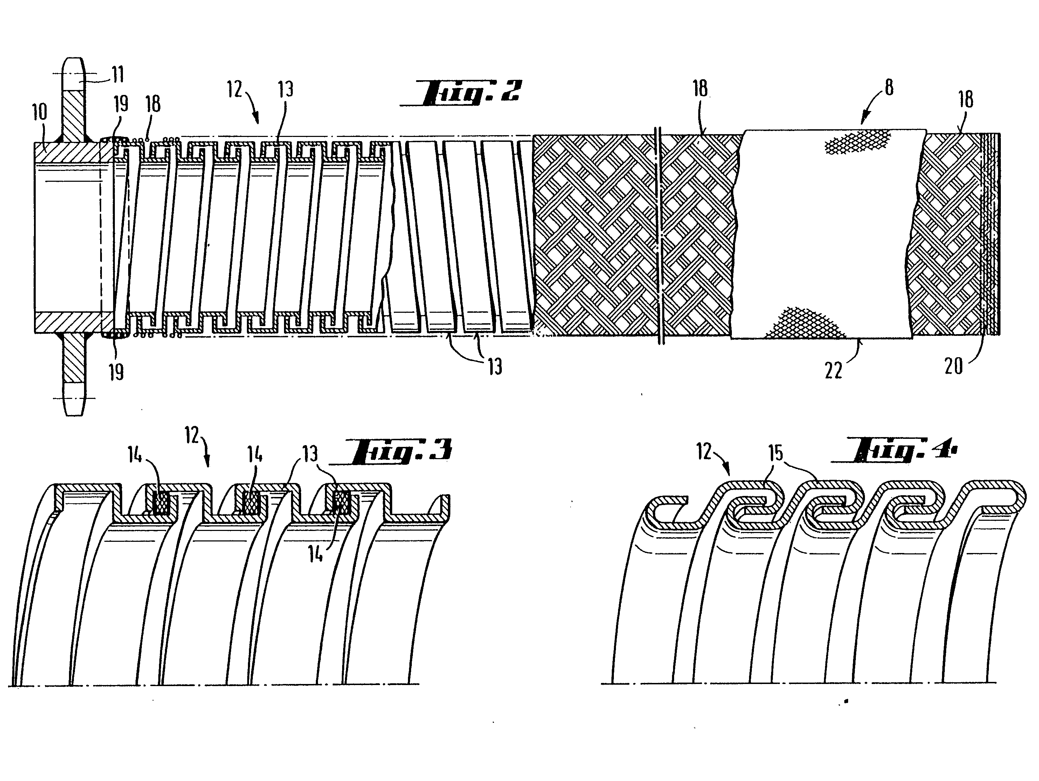

Le transport du volume 5 sur les rouleaux cintrés est provoqué par une gaine 8 montée tournante sur l'arbre porteur 1. Pour entraîner la gaine 8 on place à l'une de ses extrémités, sur un manchon 10, un pignon 11 qui coopère avec une chaîne de transmission non représentée. Une des extrémités d'un tube enroulé 12 est fixé sur le manchon 10 : le tube 12 est constitué d'une bande 13 de tôle mince en acier réfractaire, par exemple un acier au chrome-nickel approprié, dont la section possède sensiblement une forme en S et qui se trouve enroulée en hélice. Les rebords de la bande 13 s'emboîtent l'un sur l'autre à chaque tour comme le montre plus particulièrement la figure 3. On peut insérer entre les rebords qui coopèrent deux à deux un joint 14 en matériau élastique réfractaire tel qu'un cordon de fibres de verre ou de tissu d'amiante.

Au lieu d'une bande profilée dont les rebords emboîtés ne font que se recouvrir, le tube enroulé peut être constitué d'une bande 15 à profil en agrafe dont les rebords, retournés à 180°, s'accrochent deux à deux l'un sur l'autre.

Sur le tube enroulé 12 est enfilée jointive une chemise en treillis métallique 18 formée d'un tube de minces fils d'acier réfractaire. Les nappes de fils du treillis s'enroulent à 45° environ autour de l'axe du tube. A un bout, la chemise en treillis 18 est fixée au manchon 10 avec l'extrémité du tube enroulé 12, au moyen d'un cordon de soudure 19 ; à l'autre bout de la gaine, elle est aussi assemblée au tube enroulé 12 par un cordon de soudure 20.

Au lieu d'être enfilée à l'extérieur du tube enroulé 12, la chemise en treillis peut aussi être placée coaxialement à l'intérieur sans que les propriétés de la gaine flexible soient altérées.

Dans tous les cas on dispose pour former la couche externe une enveloppe 22 constituée d'un tissu ou tricot de fibres de verre ou d'un matériau fibreux réfractaire analogue.

## Revendications

1. Dispositif pour le bombage et/ou la trempe thermique de volumes de verre (5), effectués en continu par transport sur une succession de rouleaux formés d'arbres de support cintrés (1) dont chacun est entouré d'une gaine tubulaire (8) flexible axialement, mais rigide en torsion, montée tournante sur lui et entraînée en rotation pour provoquer le déplacement, caractérisé en ce que lesdites gaines (8) sont constituées d'un enroulement métallique tubulaire (12) et d'un tube en treillis métallique (18) coaxiaux et rendus solidaires à leurs extrémités.

2. Dispositif selon la revendication 1, caractérisé en ce que le tube en treillis (18) chemise la face externe du tube enroulé (12).

3. Dispositif selon la revendication 1, caractérisé en ce que le tube en treillis métallique (18) chemise l'intérieur du tube enroulé (12).

4. Dispositif selon l'une des revendications 1 à 3, caractérisé en ce que le tube enroulé (12) et le tube en treillis (18) sont constitués l'un et l'autre d'acier réfractaire.

5. Dispositif selon la revendication 1 à 4, caractérisé en ce que le tube enroulé (12) est constitué d'une bande métallique (13, 15) à section en S.

## Claims

1. Device for curving and/or thermal tempering of glass volumes (5), carried out continuously by transport on a succession of rollers formed of curved support shafts (1) each of which is surrounded by a tubular sheath (8) which is axially flexible but rigid with respect to torsion, mounted for rotation thereabout and driven in rotation to cause displacement, characterised in that said sheaths (8) comprise a tubular metallic winding (12) and a metal network tube (18) which are joined at their ends.

2. Device according to claim 1, characterised in that the network tube (18) covers the external surface of the wound tube (12).

3. Device according to claim 1, characterised in that the metal network tube (18) covers the interior of the wound tube (12).

4. Device according to one of claims 1 to 3, characterised in that the wound tube (12) and the network tube (18) are both formed of refractory steel.

5. Device according to one of claims 1 to 4, characterised in that the wound tube (12) comprises a metallic strip (13, 15) of S-shaped cross-section.

## Patentansprüche

1. Vorrichtung zum kontinuierlichen Biegen und/oder thermischen Vorspannen von Glasscheiben (5) während ihres Transports über eine Reihe von hintereinander angeordneten, aus gekrümmten Trägerwellen (1) bestehenden Walzen die jeweils von einer in axialer Richtung biegsamen torsionssteifen schlauchartigen Hülse (8) umgeben sind, die auf den Trägerwellen drehbar gelagert und als solche zum Transport der Glasscheiben in Drehung versetzt sind, dadurch gekennzeichnet, daß die torsionssteifen schlauchartigen Hülsen (8) aus einem metallischen Wickelschlauch (12) und einem Drahtgeflechtschlauch (18) bestehen, die koaxial zueinander angeordnet, und jeweils an den Enden miteinander verbunden sind.

2. Vorrichtung nach Anspruch 1, dadurch gekennzeichnet, daß der Drahtgeflechtschlauch (18) die Außenseite des Wickelschlauchs umgibt.

3. Vorrichtung nach Anspruch 1, dadurch gekennzeichnet, daß der Drahtgeflechtschlauch (18) innerhalb des Wickelschlauchs (12) an dessen Innenseite anliegend angeordnet ist.

4. Vorrichtung nach einem der Ansprüche 1 bis 3, dadurch gekennzeichnet, daß der Wickelschlauch (12) und der Drahtgeflechtschlauch (18) jeweils aus hitzebeständigem Stahl bestehen.

5. Vorrichtung nach Anspruch 1 bis 4, dadurch gekennzeichnet, daß der Wickelschlauch (12) aus einem Metallstreifen (13, 15) mit einem S-förmigen Querschnitt besteht.

**Fig. 1**

0 107 565

_Fiig. 2_

10  11  19  18  12  13  18  8  18

13

19  13

22  20

2

0 107 565

_Fiig. 3_

14  12  14  13

14

_Fiig. 4_

12  15